# EUROPÄISCHE PATENTANMELDUNG

(11) **EP 4 641 388 A1**
(43) Veröffentlichungstag der Anmeldung: **29.10.2025**
(21) Anmeldenummer: 24172236.2
(22) Anmeldetag: 24.04.2024
(51) Int. Cl.: G06F 9/52, G06F 11/16, G06F 11/20

(54) **VERFAHREN, COMPUTERPROGRAMMPRODUKT, COMPUTERLESBARES MEDIUM UND SYSTEM**

(71) Anmelder: Siemens Aktiengesellschaft, 80333 München (DE)
(72) Erfinder: Grosch, Thomas, 90574 Roßtal (DE); Behringer, Martin, 92265 Edelsfeld (DE)
(74) Vertreter: Siemens Patent Attorneys

(57) **Zusammenfassung**

Die Erfindung betrifft ein Verfahren, insbesondere ein computergestütztes Verfahren, zum Betreiben einer Software-Anwendung (App), welche parallel in zwei Instanzen läuft, wobei eine der beiden Instanzen temporär eine aktive Instanz ist und die andere der beiden Instanzen eine passive Instanz ist, wobei die passive Instanz nicht ausgeführt wird und in bestimmten Abständen von der aktiven Instanz synchronisiert wird, so dass die passive Instanz eine redundante Instanz zu der aktiven Instanz bildet.

## Beschreibung

Die vorliegende Erfindung betrifft ein Verfahren, insbesondere ein computergestütztes Verfahren, zum Betreiben einer Software-Anwendung (App). Ferner betrifft die Erfindung ein Computerprogrammprodukt und ein computerlesbares Medium. Außerdem betrifft die Erfindung ein System.

Insbesondere aus Rationalisierungsgründen spielt die Automatisierung von industriellen Prozessen beziehungsweise in industriellen Anlagen oder Maschinen eine zunehmende Rolle. Gleichzeitig muss eine hohe Qualität der in industriellen Prozessen hergestellten Erzeugnisse sichergestellt werden. Dabei kommt es insbesondere auch auf die Nachverfolgbarkeit an. So kann es beispielsweise erforderlich sein, auch Jahre nach der Herstellung eines Erzeugnisses noch feststellen zu können, unter welchen Produktionsbedingungen dieses hergestellt wurde bzw. welches die Ausgangsstoffe waren.

Hierzu ist es zunehmend üblich, Daten bei der Herstellung von Erzeugnissen, das heißt bei industriellen Prozessen, permanent zu speichern und zu überwachen. Dies kann beispielsweise mittels bestimmter Software-Anwendungen (Apps) erfolgen. Diese können auf dem Automatisierungs-System, beispielsweise einer entsprechenden speicherprogrammierbaren Steuerung oder einem Industrie-PC direkt, oder in einer Cloud-Umgebung ausgeführt werden. Auf Basis der Analyse dieser Fertigungsdaten kann neben der reinen Nachverfolgbarkeit auch eine Optimierung von industriellen Prozessen erfolgen.

Solche Software-Anwendungen finden dabei neben der klassischen Echtzeit-Steuerung von industriellen Maschinen und Anlagen statt und werden auch als nicht-echtzeitfähige Dienste bezeichnet. Zunehmend hängt jedoch die Produktivität von industriellen Anlagen von der Nutzung solcher nicht-echtzeitfähiger Dienste ab. Dementsprechend besteht das Bedürfnis, eine hohe Verfügbarkeit dieser Software-Anwendungen sicherzustellen. Bei solchen nicht-echtzeitfähigen Diensten erfolgt zumeist eine Redundanzlösung über einen Cloud-Anbieter. Dabei wird in der Regel ein Ersatz-Server gestartet, sobald ein Produktiv-Server, auf welchem die Software-Anwendung läuft, ausgefallen ist. Dies geht meist mit relativ langen Umschaltzeiten einher. Außerdem besteht die Gefahr eines Datenverlustes, so dass gegebenenfalls aufwendige Berechnungen wie zum Beispiel bei neuronalen Netzen wiederholt werden müssen.

Vor diesem Hintergrund besteht die Aufgabe der Erfindung darin, ein alternatives Verfahren zum Betreiben einer Software-Anwendung (App) zur Verfügung zu stellen, welches insbesondere eine hohe Verfügbarkeit und kurze Umschaltzeiten der Software-Anwendung sicherstellt. Außerdem sollen bevorzugt Datenverluste auf ein Minimum reduziert werden.

Diese Aufgabe ist gelöst durch ein Verfahren, insbesondere ein computergestütztes Verfahren, zum Betreiben einer Software-Anwendung (App), welche parallel in zwei bevorzugt identischen Instanzen läuft, wobei eine der Instanzen zumindest temporär eine aktive Instanz ist und die andere der beiden Instanzen eine passive Instanz ist, wobei die passive Instanz nicht ausgeführt wird und in bestimmten Abständen von der aktiven Instanz synchronisiert wird, so dass die passive Instanz eine redundante Instanz zu der aktiven Instanz bildet.

Der Erfindung liegt die grundsätzliche Überlegung zugrunde, die Verfügbarkeit von solchen nicht-echtzeitfähigen Diensten zu verbessern, indem die Software-Anwendung grundsätzlich auf zwei verschiedenen Instanzen vorhanden ist bzw. in zwei verschiedenen Instanzen läuft. Bei den verschiedenen Instanzen kann es sich insbesondere um verschiedene physische Instanzen handeln, zum Beispiel um Rechenknoten, Edge-Geräte, PCs oder ähnliches. Prinzipiell ist es auch denkbar, dass die Software-Anwendung auf mehr als zwei Instanzen vorhanden ist bzw. läuft. Dabei wird die Software-Anwendung nur in einer aktiven Instanz ausgeführt. Das bedeutet, dass die passive Instanz im Prinzip nur vorhanden ist und die Software-Anwendung in der passiven Instanz lediglich synchronisiert wird. Fällt aus irgendeinem Grund die Software-Anwendung in der aktiven Instanz aus, so kann die passive Instanz unmittelbar und ohne nennenswerte Zeitverzögerungen zur aktiven Instanz werden und die entsprechenden Aufgaben praktisch lückenlos übernehmen. Dadurch kann eine hohe Verfügbarkeit der Software-Anwendung bzw. der nicht-echtzeitfähigen Dienste sichergestellt werden. In Konsequenz werden die Ausfallzeiten von industriellen Anlagen verringert, so dass sich eine höhere Produktivität ergibt. Ein zeitaufwändiges Hochfahren einer Ersatz-Rechnereinheit oder eines Servers ist nicht erforderlich.

In weiterer Ausgestaltung des erfindungsgemäßen Verfahrens kann die passive Instanz und das Synchronisieren der passiven Instanz für die Software-Anwendung transparent sein. Darunter ist zu verstehen, dass insbesondere die aktive Instanz die passive Instanz und das bevorzugt regelmäßige Synchronisieren dieser überhaupt nicht wahrnimmt. Dadurch müssen weder in der aktiven, noch in der passiven Instanz Vorkehrungen für die Synchronisierung getroffen werden bzw. vorhanden sein. Es können also alle am Markt verfügbaren Applikationen oder Software-Anwendungen oder Dienste verwendet werden.

Bevorzugt ist die Software-Anwendung nicht-echtzeitfähig. Darunter ist insbesondere zu verstehen, dass die Software-Anwendung nicht zur unmittelbaren Steuerung einer industriellen Anlage oder Maschine herangezogen wird, sondern lediglich im Hintergrund abläuft. Beispielsweise kann die Software-Anwendung dazu dienen, Parameter bei industriellen Prozessen, beispielsweise bei der Herstellung von Erzeugnissen auf industriellen Anlagen oder Maschinen, aufzuzeichnen und zu erfassen. Die Software-Anwendung kann dazu eingesetzt werden, entsprechende Parameter zu analysieren und zu optimieren. Konkret kann die Software-Anwendung zur Analyse von Fertigungsdaten einer Produktionsanlage verwendet werden. Die Software-Anwendung kann dabei über eine künstliche Intelligenz verfügen und/oder mit einer künstlichen Intelligenz interagieren, um eine günstige Analyse von Fertigungsdaten und einer Optimierung durchzuführen. Bei den erfassten Fertigungsdaten kann es sich beispielsweise um physikalische Parameter wie Drücke, Temperaturen, Kräfte, chemische Zusammensetzungen oder ähnliches handeln.

In weiterer Ausgestaltung kann die Software-Anwendung in einem Betriebssystem-Prozess ablaufen. Dabei kann die Software-Anwendung auf Betriebssystem-Ressourcen zugreifen. Diese können beispielsweise Speicher, insbesondere Arbeitsspeicher, Dateien, und/oder andere Betriebssystem-Objekte umfassen. Dazu können beispielsweise Mutexe und/oder Semaphore oder dergleichen gehören. Mit anderen Worten kann die Software-Anwendung auf Ressourcen des Betriebssystems zugreifen. Bei dem Betriebssystem kann es sich um ein Linux-Betriebssystem handeln.

Die Betriebssystem-Ressourcen können Identifikationsbezeichnungen, insbesondere Identifikationsnummern, aufweisen, wobei bevorzugt für die Ressourcen des Betriebssystems in beiden Instanzen die gleichen Identifikationsbezeichnungen verwendet werden. Dadurch kann vermieden werden, dass es bei einem Wechsel zwischen den beiden Instanzen zu Kompatibilitätsproblemen kommt. In ähnlicher Weise können bei beiden Instanzen für alle verwendeten Daten die gleichen virtuellen Adressen verwendet werden.

Die Synchronisierung der passiven Instanz kann über eine Komponente erfolgen, die nicht Bestandteil des Betriebssystems ist. Möglich ist auch, dass die Synchronisierung über eine Komponente erfolgt, die Bestandteil des Betriebssystems ist. Mit anderen Worten kann über einen entsprechenden Dienst oder eine separate Applikation, die insbesondere nicht Bestandteil des Betriebssystems ist, eine Synchronisierung der passiven Instanz erfolgen. Bevorzugt ist die Synchronisierung nicht Teil der Software-Anwendung.

Bevorzugt laufen die beiden Instanzen jeweils in verschiedenen Hardware-Knoten ab. Bei den Hardware-Knoten kann es sich beispielsweise jeweils um Steuerungseinrichtungen, beispielsweise speicherprogrammierbare Steuerungen, und/oder um einen PC, insbesondere einen Industrie-PC, und/oder einen Server handeln. Das bedeutet, dass die beiden Instanzen physikalisch voneinander getrennt ablaufen. Bevorzugt sind die beiden Hardware-Knoten voneinander beabstandet. Das hat zur Folge, dass selbst bei einer Zerstörung, beispielsweise bei einem Brand, zumeist nur ein Hardware-Knoten betroffen ist, so dass eine der beiden Instanzen stets weiterhin ablaufen kann, so dass die Software-Anwendung praktisch durchgängig ausgeführt werden kann.

In weiterer Ausgestaltung können die Hardware-Knoten Bestandteil eines Netzwerks sein. Sie können Schnittstellen, insbesondere Ethernet-Schnittstellen, aufweisen. Mit anderen Worten können die Hardware-Knoten Teil eines größeren Netzwerks sein, welches weitere Server, PCs oder allgemein Rechnereinrichtungen aufweist.

Die Synchronisierung der passiven Instanz durch die aktive Instanz kann in regelmäßigen Zeitabständen erfolgen. Dieser Ausgestaltung liegt die Überlegung zugrunde, dass relativ einfach stets nach definierten Zeitabständen eine Synchronisierung durchgeführt wird. Je kürzer dabei die Abstände sind, desto schlechter wird die Performance der Software-Anwendung, weil mehr Rechnerleistung für die Synchronisierung aufgewendet werden muss. Gleichzeitig kann jedoch die passive Instanz im entsprechenden Fall die Arbeit nahezu im gleichen Zustand fortsetzen.

Möglich ist auch, dass eine Synchronisierung der passiven Instanz dann erfolgt, wenn die aktive Instanz Daten zu einem externen Client versenden soll. Bei einem solchen externen Client kann es sich beispielsweise um eine weitere Rechnereinrichtung eines Netzwerks handeln. In diesem Fall erfolgt die Synchronisierung nicht in regelmäßigen Zeitabständen, sondern genau dann, wenn Daten versendet werden sollen. Konkret kann die Synchronisierung erfolgen, bevor die aktive Instanz Daten zu einem externen Client versendet. Es kann vorgesehen sein, dass die passive Instanz nach dem Synchronisieren dies zurück zur aktiven Instanz quittiert. Dementsprechend kann das Verfahren so ausgestaltet sein, dass die Daten zum externen Client erst dann übertragen werden, wenn die passive Instanz die Synchronisierung zurück zur aktiven Instanz quittiert hat.

Diese Ausgestaltung basiert auf der Überlegung, dass ein Versenden von Daten an einen externen Client erst dann möglich ist, wenn zuvor die passive Instanz synchronisiert wurde. Dadurch kann sichergestellt werden, dass zum Zeitpunkt des Versendens der Daten an einen externen Client beispielsweise über ein Netzwerk oder das Internet sichergestellt ist, dass die passive Instanz den gleichen Zustand hat wie die aktive Instanz. Dadurch erhält beispielsweise ein externer Client nach dem Ausfall der aktiven Instanz die gleiche Mitteilung oder Antwort von der passiven Instanz.

Möglich ist auch eine Kombination der beiden Varianten. So kann beispielsweise eine Synchronisierung sowohl in regelmäßigen Zeitabständen stattfinden, als auch immer dann, wenn die aktive Instanz Daten zu einem externen Client versenden möchte. Eine solche Kombination bietet sich vor allem dann an, wenn die aktive Instanz nur sehr selten Daten zu externen Clients versendet.

Bei einem erstmaligen Synchronisieren der passiven Instanz durch die aktive Instanz können sämtliche Daten übertragen werden, die notwendig sind, um die passive Instanz auf den gleichen Zustand zu bringen wie die aktive Instanz zum Zeitpunkt der Synchronisierung. Mit anderen Worten kann bei einem erstmaligen Synchronisieren eine relativ große Datenmenge übertragen werden. Auf diese Weise kann sichergestellt werden, dass die passive Instanz auf den gleichen Zustand gebracht wird wie die aktive Instanz.

Beim Synchronisieren kann der Inhalt des Arbeitsspeichers der aktiven Instanz physikalisch in den Arbeitsspeicher der passiven Instanz kopiert werden. Mit anderen Worten wird ein physikalisches Abbild des Arbeitsspeichers der aktiven Instanz in den Arbeitsspeicher der passiven Instanz geschrieben. Da die Speicheradressen bevorzugt für die beiden Instanzen gleich sind, ist dies unproblematisch. Sichergestellt werden kann dies durch eine entsprechende Speicherverwaltung.

In weiterer Ausgestaltung kann beim Synchronisieren ein Delta-Update durchgeführt werden. Darunter ist insbesondere zu verstehen, dass nicht sämtliche Speicherinhalte von der aktiven Instanz zur passiven Instanz übertragen werden, sondern lediglich Bereiche, die sich gegenüber dem letzten Synchronisieren geändert haben.

Bevorzugt wird beim Delta-Update der Arbeitsspeicher in Einheiten zerlegt. Zu jeder Speichereinheit kann eine Kennung, beispielsweise ein Hash-Wert, gespeichert werden. Durch diese Kennung können Änderungen in der betroffenen Speichereinheit erkannt werden. Solange die Kennungen gleich sind, hat sich die betreffende Speichereinheit nicht geändert und braucht somit auch beim Synchronisieren nicht übertragen zu werden. Liegt eine Änderung vor, so kann diese Speichereinheit dann übertragen werden. Durch ein Delta-Update kann in einem erheblichen Umfang Rechnerleistung und Übertragungsbandbreite eingespart werden.

Die Kennung der Speichereinheit wird dabei bevorzugt lokal insbesondere auf dem Hardware-Knoten, auf welchem die aktive Instanz abläuft, gesichert. Die ermittelte Kennung kann mit der vorherigen Kennung verglichen werden, so dass nur die Einheiten, deren Kennung sich geändert hat, synchronisiert werden.

In weiterer Ausgestaltung können die Betriebssystem-Ressourcen in regelmäßigen Zeitabständen synchronisiert werden. Denkbar ist auch, dass die Betriebssystem-Ressourcen nur dann synchronisiert werden, wenn Betriebssystem-Ressourcen geändert oder neu hinzugefügt werden.

In ähnlicher Weise kann mit Dateisystem-Objekten bzw. Dateien verfahren werden. Dies basiert auf der Überlegung, dass die Software-Anwendung einen Teil Ihres Zustands in Dateien auf einem insbesondere persistenten Medium speichern kann. Auch diese Inhalte müssen auf das passive System synchronisiert werden. Denkbar ist auch hier die Verwendung eines Delta-Updates, bei welchem nur die Änderungen in den Dateien übertragen werden.

Die der Erfindung zugrunde liegende Aufgabe ist ferner gelöst durch ein Computerprogrammprodukt umfassend Befehle, die bei der Ausführung des Programms durch einen Computer diesen veranlassen, das Verfahren wie zuvor beschrieben auszuführen.

Ferner ist die der Erfindung zugrunde liegende Aufgabe gelöst durch ein computerlesbares Medium, insbesondere ein Speichermedium, in welchem ein solches Computerprogrammprodukt gespeichert ist.

Außerdem ist die Aufgabe gelöst durch ein System zur Datenverarbeitung, umfassend Mittel zur Ausführung des Verfahrens wie zuvor beschrieben.

Bevorzugt umfasst das System mindestens zwei, insbesondere genau zwei Hardware-Knoten, auf welchen die Software-Anwendung läuft bzw. laufen kann, wobei auf einem Hardware-Knoten die aktive Instanz und auf einem anderen Knoten die passive Instanz läuft.

Die Hardware-Knoten können über ein Netzwerk miteinander verbunden sein bzw. Teil eines Netzwerks sein. Dazu können die Hardware-Knoten Schnittstellen, insbesondere Ethernet-Schnittstellen, aufweisen. Das Netzwerk kann weitere Komponenten enthalten, beispielsweise weitere Rechner- oder Steuerungseinheiten, Server, Mensch- Maschine-Schnittstellen.

Für die weitere Ausgestaltung der Erfindung wird auf die Unteransprüche und auf die nachstehende Beschreibung eines Ausführungsbeispiels unter Bezugnahme auf die Zeichnung verwiesen. In der Zeichnung zeigt:

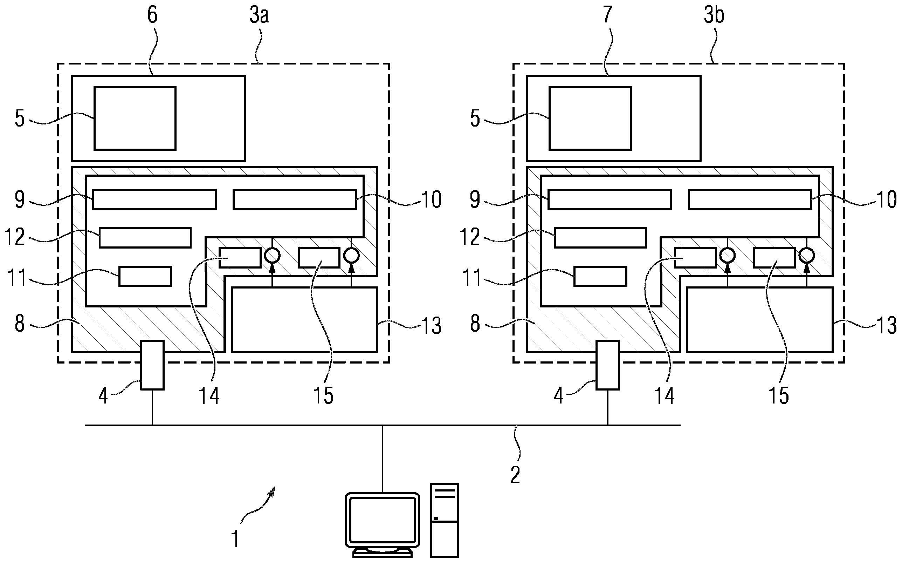

Figur 1 ein erfindungsgemäßes System und den Ablauf des erfindungsgemäßen Verfahrens in einer schematischen Darstellung.

Die Figur 1 zeigt ein System 1 gemäß der vorliegenden Erfindung, welches ein schematisch dargestelltes Netzwerk 2 mit zwei im oberen Bereich der Figur 1 dargestellten Hardware-Knoten 3a, 3b aufweist. Die beiden Hardware-Knoten 3a, 3b sind dabei als Industrie-PCs ausgebildet und weisen jeweils eine Ethernet-Schnittstelle 4 auf.

Das System 1 kann eingesetzt werden, um ein Verfahren zum Betreiben einer Software-Anwendung 5 (App) auszuführen. Bei der Software-Anwendung 5 kann es sich um eine nicht-echtzeitfähige Anwendung handeln, welche insbesondere dazu eingesetzt wird, Fertigungsdaten einer Produktionsanlage zu erfassen und/oder zu analysieren. Bevorzugt handelt es sich nicht um eine Anwendung zur unmittelbaren Steuerung einer Produktionsanlage oder einer industriellen Anlage oder Maschinen oder eines industriellen Prozesses.

Die Software-Anwendung 5 läuft in zwei Instanzen 6, 7 ab, wobei eine Instanz 6 eine aktive Instanz ist und die andere Instanz 7 eine passive Instanz ist. Die Software- Anwendung 5 wird nur in der aktiven Instanz 6 ausgeführt. Die aktive Instanz 6 läuft dabei auf dem Hardware-Knoten 3a und die passive Instanz 7 läuft auf dem Hardware-Knoten 3b ab.

Die Software-Anwendung 5 läuft in einem Betriebssystem-Prozess ab. Dies bedeutet, dass jeder Hardware-Knoten 3a, 3b jeweils ein Betriebssystem 8 aufweist. Dabei greift die Software-Anwendung 5 auf Betriebssystem-Ressourcen zu. Bei den Betriebssystem-Ressourcen kann es sich beispielsweise um Kommunikations-Ressourcen 9, um einen Arbeitsspeicher 10, um Dateien 11 und um andere Betriebssystem-Objekte 12 handelt.

Die passive Instanz 7 der Software-Anwendung 5 wird nicht ausgeführt und in bestimmten Abständen von der aktiven Instanz 6 synchronisiert. Dementsprechend bildet die passive Instanz 7 eine redundante Instanz zu der aktiven Instanz 6.

Eine Synchronisierung der passiven Instanz kann über eine Synchronisierungs-Komponente 13 erfolgen, die vorliegend nicht Bestandteil des Betriebssystems 8 ist.

Im vorliegenden Fall kann die Synchronisierung der passiven Instanz 7 durch die aktive Instanz 6 in regelmäßigen Zeitabständen erfolgen. Denkbar ist auch, dass die Synchronisierung der passiven Instanz 7 erfolgt, wenn die aktive Instanz 6 Daten zu einem externen Client versenden soll.

Konkret kann beim Synchronisieren der passiven Instanz 7 ein Delta-Update durchgeführt werden. Dies bedeutet, dass der Arbeitsspeicher 10 in Einheiten zerlegt werden kann und zu jeder Speichereinheit eine Kennung abgespeichert wird, durch welche Änderungen der betroffenen Speichereinheit erkannt werden. Diese Kennung kann lokal insbesondere auf dem Hardware-Knoten 3a, auf welchen die aktive Instanz 6 abläuft, gesichert werden. Durch Vergleich der Kennung mit der vorherigen Kennung kann erkannt werden, ob eine Änderung der betroffenen Speichereinheit stattgefunden hat.

Möglich ist, dass die Betriebssystem-Ressourcen, beispielsweise die Kommunikationsressourcen 9, der Arbeitsspeicher 10, die Dateien 11 und/oder weitere Betriebssystemobjekte 12, in regelmäßigen Zeitabständen synchronisiert werden. Ergänzend oder alternativ können die Betriebssystem-Ressourcen synchronisiert werden, wenn diese geändert oder Betriebssystem-Ressourcen neu hinzugefügt werden.

Im vorliegenden Beispiel wird als Betriebssystem 8 Linux verwendet. Zum Synchronisieren kann eine ptrace-Schnittstelle 14 und eine procfs-Schnittstelle 15 genutzt werden. Bei der passiven Instanz 7 werden die gleichen Schnittstellen verwendet. Bei diesen beiden Schnittstellen 14, 15 handelt es sich um Schnittstellen, die auf allen gängigen Linux-Betriebssystemen verfügbar sind. Damit ist die Synchronisierungs-Komponente 13 außerhalb des Betriebssystems angesiedelt und unterliegt damit nicht einer open-source-Lizenz.

Durch das erfindungsgemäße Verfahren, insbesondere die regelmäßige Synchronisierung der passiven Instanz 7 von der aktiven Instanz 6, kann sichergestellt werden, dass bei einem Ausfall des Hardware-Knotens 3a und damit der temporär aktiven Instanz 6 unmittelbar die passiven Instanz 7 praktisch einspringen kann, das heißt zur aktiven Instanz werden kann, und somit eine hohe Verfügbarkeit der Software-Anwendung 5 erreicht wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren, insbesondere computergestütztes Verfahren, zum Betreiben einer Software-Anwendung (5) (App), welche parallel in zwei Instanzen läuft, wobei eine der beiden Instanzen temporär eine aktive Instanz (6) ist und die andere der beiden Instanzen eine passive Instanz (7) ist, wobei die passive Instanz (7) nicht ausgeführt wird und in bestimmten Abständen von der aktiven Instanz (6) synchronisiert wird, so dass die passive Instanz (7) eine redundante Instanz zu der aktiven Instanz (6) bildet.

2. Verfahren nach Anspruch 1, **dadurch gekennzeichnet, dass** die passive Instanz (7) und das Synchronisieren für die Software-Anwendung (5) transparent sind, und/oder dass die Software-Anwendung (5) nicht-echtzeitfähig ist, und/oder dass die Software-Anwendung (5) zur Analyse von Fertigungsdaten einer Produktionsanlage verwendet wird.

3. Verfahren nach einem der vorherigen Ansprüche, **dadurch gekennzeichnet, dass** die Software-Anwendung (5) in einem Betriebssystem-Prozess abläuft, wobei, insbesondere, die Software-Anwendung (5) auf Betriebssystem-Ressourcen zugreift, wobei, bevorzugt, die Betriebssystem-Ressourcen Speicher, insbesondere Arbeitsspeicher (10), Dateien (11) und/oder andere Betriebssystem-Objekte (12), insbesondere Mutexe und/oder Semaphore, umfassen, und/oder wobei, bevorzugt, die Betriebssystem-Ressourcen Identifikationsbezeichnungen, insbesondere Identifikationsnummern, aufweisen, wobei für die Ressourcen des Betriebssystems (8) in beiden Instanzen (6,7) die gleichen Identifikationsbezeichnungen verwendet werden.

4. Verfahren nach Anspruch 3, **dadurch gekennzeichnet, dass** bei den beiden Instanzen (6,7) für alle verwendeten Daten die gleichen virtuellen Adressen verwendet werden.

5. Verfahren nach einem der vorherigen Ansprüche, **dadurch gekennzeichnet, dass** die Synchronisierung der passiven Instanz (7) über eine Komponente (13) erfolgt, die nicht Bestandteil des Betriebssystems (8) ist, oder dass die Synchronisierung über eine Komponente (13) erfolgt, die Bestandteil des Betriebssystems (8) ist.

6. Verfahren nach einem der vorherigen Ansprüche, **dadurch gekennzeichnet, dass** die beiden Instanzen jeweils in verschiedenen Hardware-Knoten (3a, 3b) ablaufen, wobei, insbesondere, die Hardware-Knoten (3a, 3b) Bestandteil eines Netzwerks (2) sind und/oder Schnittstellen, insbesondere Ethernet-Schnittstellen (4), aufweisen.

7. Verfahren nach einem der vorherigen Ansprüche, **dadurch gekennzeichnet, dass** eine Synchronisierung der passiven Instanz (7) durch die aktive Instanz (6) in regelmäßigen Zeitabständen erfolgt.

8. Verfahren nach einem der vorherigen Ansprüche, **dadurch gekennzeichnet, dass** eine Synchronisierung der passiven Instanz (7) erfolgt, wenn die aktive Instanz (6) Daten zu einem externen Client versenden soll.

9. Verfahren nach Anspruch 8, **dadurch gekennzeichnet, dass** die Synchronisierung erfolgt, bevor die aktive Instanz (6) Daten zu einem externen Client versendet, wobei, insbesondere, die passive Instanz (7) nach dem Synchronisieren dies zurück zur aktiven Instanz (6) quittiert, wobei, bevorzugt, die Daten zum externen Client erst dann übertragen werden, wenn die passive Instanz (7) die Synchronisierung zurück zur aktiven Instanz (6) quittiert hat.

10. Verfahren nach einem der vorherigen Ansprüche, **dadurch gekennzeichnet, dass** bei einem erstmaligen Synchronisieren der passiven Instanz (7) durch die aktive Instanz (6) sämtliche Daten übertragen werden, die notwendig sind, um die passive Instanz (7) auf den gleichen Zustand zu bringen wie die aktive Instanz (6) zum Zeitpunkt der Synchronisierung, und/oder dass beim Synchronisieren der Inhalt des Arbeitsspeichers (10) der aktiven Instanz (6) physikalisch in den Arbeitsspeicher (10) der passiven Instanz (7) kopiert wird.

11. Verfahren nach einem der vorherigen Ansprüche, **dadurch gekennzeichnet, dass** beim Synchronisieren ein Delta-Update durchgeführt wird, wobei, insbesondere, beim Delta-Update der Arbeitsspeicher (10) in Einheiten zerlegt wird und zu jeder Speichereinheit eine Kennung, insbesondere ein Hash-Wert, gespeichert wird, durch welche Änderungen in der betroffenen Speichereinheit erkennt werden, wobei, bevorzugt, die Kennung der Speichereinheit lokal insbesondere auf dem Hardware-Knoten (3a, 3b), auf welchem die aktive Instanz (6) abläuft, gesichert wird, und die ermittelte Kennung mit der vorherigen Kennung verglichen wird, so dass nur die Einheiten, deren Kennung sich geändert hat, synchronisiert werden.

12. Verfahren nach einem der vorherigen Ansprüche, **dadurch gekennzeichnet, dass** die Betriebssystem-Ressourcen in regelmäßigen Zeitabständen synchronisiert werden, und/oder dass die Betriebssystem-Ressourcen dann synchronisiert werden, wenn Betriebssystem-Ressourcen geändert oder neu hinzugefügt werden.

13. Computerprogrammprodukt umfassend Befehle, die bei der Ausführung des Programms durch einen Computer diesen veranlassen, das Verfahren nach einem der vorherigen Ansprüche auszuführen.

14. Computerlesbares Medium, insbesondere Speichermedium, auf welchem das Computerprogrammprodukt nach Anspruch 13 gespeichert ist.

15. System (1) zur Datenverarbeitung, umfassend Mittel zur Ausführung des Verfahrens nach einem der Ansprüche 1 bis 12.
